(19) Europäisches Patentamt / European Patent Office / Office européen des brevets

(11) **EP 2 200 193 B1**

(12) **FASCICULE DE BREVET EUROPEEN**

(45) Date de publication et mention de la délivrance du brevet:
**14.10.2015 Bulletin 2015/42**

(51) Int Cl.:
***H04B 10/61*** *(2013.01)*

(21) Numéro de dépôt: **09179288.7**

(22) Date de dépôt: **15.12.2009**

(54) **Démultiplexage de polarisation pour récepteur optique cohérent**

Polarisationsdemultiplexen für kohärenten optischen Empfänger

Polarization demultiplexing for coherent optical receiver

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.12.2008 FR 0858855**

(43) Date de publication de la demande:
**23.06.2010 Bulletin 2010/25**

(73) Titulaire: **ALCATEL LUCENT**
**92100 Boulogne-Billancourt (FR)**

(72) Inventeurs:
• **Renaudier, Jeremie**
**91620, NOZAY (FR)**
• **Bertran Pardo, Oriol**
**91620, NOZAY (FR)**

(74) Mandataire: **Sciaux, Edmond**
**Alcatel-Lucent International**
**148/152 route de la Reine**
**92100 Boulogne-Billancourt (FR)**

(56) Documents cités:
**US-A1- 2008 152 362**

• **SEB J SAVORY: "Digital filters for coherent optical receivers" OPTICS EXPRESS, OSA (OPTICAL SOCIETY OF AMERICA), WASHINGTON DC, (US), vol. 16, no. 2, 21 janvier 2008 (2008-01-21), pages 804-817, XP007906766 ISSN: 1094-4087**
• **TSEYTLIN M ET AL: "Digital, endless polarization control for polarization multiplexed fiber-optic communications" OPTICAL FIBER COMMUNICATION CONFERENCE. (OFC). POSTCONFERENCE DIGEST. ATLANTA, GA, MARCH 23 - 28, 2003; [TRENDS IN OPTICS AND PHOTONICS SERIES. (TOPS)], WASHINGTON, DC : OSA, US, vol. TOPS. VOL. 86, 23 mars 2003 (2003-03-23), pages 103-103, XP010680181 ISBN: 978-1-55752-746-2**

**EP 2 200 193 B1**

**Description**

L'invention se rapporte à un système de communications optiques à l'une des extrémités duquel sont émis des signaux optiques multiplexés en polarisation pour transporter des données. Plus particulièrement, l'invention concerne un étage électronique de démultiplexage, dans une chaine de détection optique cohérente d'un tel système, cet étage de démultiplexage devant permettre de filtrer dans le domaine électrique les données transmises par un milieu optique sur chacune des deux polarisations optiques. L'invention peut être appliquée lorsque le milieu optique est constitué d'une liaison par fibres, bien que d'autres milieux optiques de propagation puissent être considérés. L'invention peut aussi être appliquée pour des formats de modulation des données optiques en phase, en amplitude ou en fréquence ou leur combinaison. Elle peut également être utilisée dans des réseaux transmettant une seule longueur d'onde ou des réseaux transmettant plusieurs longueurs d'ondes, comme des réseaux WDM (en anglais, Wavelength Division Multiplexing).

Le document US 2008/0152362 A1 décrit une méthode pour faire fonctionner un récepteur optique, où à chaque instant d'une séquence d'échantillonnage, un premier vecteur représentant un signal numérique complexe à 2 dimensions est produit. La première composante indique une phase et une amplitude d'une composante en polarisation d'une porteuse optique modulée et la deuxième composante est indicative de la phase et de l'amplitude d'une deuxième composante en polarisation de la porteuse. A chaque instant d'échantillonnage, la méthode inclut de construire un deuxième vecteur représentant un deuxième signal numérique complexe, obtenu par rotation du premier vecteur à un instant d'échantillonnage. La rotation compense une rotation de polarisation produite par la transmission de la porteuse optique modulée depuis un émetteur optique jusqu'à un récepteur optique.

On connaît des chaines de détection optique cohérente pour détecter des signaux multiplexés en polarisation après leur propagation dans un milieu optique. Une telle chaîne est par exemple décrite, pour une propagation dans un système optique à fibres, dans le document « Digital filters for coherent optical receivers » par Seb. J Savory (Optics Express, 21 Janvier 2008, Vol. 16, N°2, pages 804 à 817). La partie électronique d'une telle chaîne optique cohérente présente en général un étage de conversion analogique/digital (étage A/D) pour transformer les signaux optiques en signaux électriques. Cet étage A/D est suivi de plusieurs autres étages électroniques, dont les fonctions sont complémentaires et optionnelles. Des étages électroniques ont ainsi déjà été décrits pour réaliser les fonctions d'extraction d'horloge, le reséquencement, la compensation de dispersion chromatique, le démultiplexage de polarisation, la récupération de porteuse, la décision, etc.... L'étage électronique démultiplexeur fonctionne en général comme un filtre à réponse finie, présentant deux entrées et deux sorties, et possédant une structure en « papillon » (en anglais, « butterfly structure »). Le démultiplexeur peut être décrit par quatre coefficients complexes qui, idéalement forment une matrice 2x2 qui est la matrice inverse de la matrice de Jones décrivant certains effets de la propagation dans le système optique dons lequel le signal optique multiplexé en polarisation s'est propagé. Ces effets sont par exemple, si le milieu optique est constitué par des fibres optiques, ceux qui induisent des variations de l'état de polarisation reçu, par exemple la dispersion du mode de polarisation (en anglais, PMD pour « Polarization Mode Dispersion »), les effets non linéaires, ou d'autres effets. Ces effets variant rapidement, il est nécessaire d'actualiser régulièrement la valeur des quatre coefficients complexes décrivant les propriétés de filtrage du démultiplexeur : l'étage de démuliiplexage est donc conçu comme un filtre adaptatif. Les algorithmes d'adaptation des quatre coefficients complexes conduisent parfois à un résultat dégénéré, les deux signaux filtrés en sortie du démultiplexeur tendant alors à devenir identiques. Par exemple, les deux signaux filtrés peuvent dans ces conditions de dégénérescence, porter tous les deux des données semblables correspondant à celles transportées par une seule des deux polarisations optiques propagées dans le système optique. Pour un bon fonctionnement du démultiplexeur, ces deux signaux démultiplexés doivent au contraire porter des données différentes correspondant aux deux fiots binaires portés par les deux signaux multiplexés en polarisation lors de leur propagation dans le système optique. De manière à résoudre ce problème de dégénérescence, il a été proposé de mesurer les caractéristiques intrinsèques de la matrice constituée des quatre coefficients complexes du démultiplexeur, au fur et à mesure de l'adaptation des valeurs de ces coefficients. Par exemple, dans la référence « Digital filters for coherent optical receivers », où les valeurs des coefficients sont adaptées en utilisant un algorithme à module constant {en Anglais, CMA pour « Constant Modulus Algorithm »}, Seb. J Savary propose d'utiliser la mesure du déterminant de la matrice comme indicateur d'une dégénérescence. Cette méthode présente le premier inconvénient d'être impuissante à donner une indication directe des performances de démultiplexage obtenues, les paramètres mesurés étant seulement caractéristiques du démultiplexeur. D'autre port, en cas de dégénérescence détectée à partir de la valeur du déterminant, la procédure de réinitialisation des coefficients est complexe, en prenant en compte les valeurs successives prises par les quatre coefficients au cours de temps d'horloge successifs. La procédure de réinitialisation est donc coûteuse en puissance de calcul. Il existe donc le besoin de remédier à au moins certains de ces inconvénients en proposant un étage de démultiplexage dont on puisse connaître en permanence la performance fonctionnelle. Il existe aussi un besoin accessoire, dans certains cas, de disposer de disposer de procédures de réinitialisation en réponse à une détection d'une dégénérescence, qui ne soit pas coûteuses en puissance de calcul,

Pour cela, l'invention fournit un procédé de démultiplexage de polarisation pour récepteur optique cohérent, comprenant les étapes consistant en :

a) filtrer dans un filtre adaptatif de démultiplexage de polarisation un premier signal multiplexé et un deuxième signal multiplexé de manière à produire un premier signal filtré et un deuxième signal filtré, lesdits premier signal multiplexé et deuxième signal multiplexé constituant deux composantes électriques obtenues par une chaîne de détection cohérente d'un signal optique multiplexé en polarisation,

b) de manière itérative, déterminer au moins un paramètre d'erreur en fonction desdits premier et deuxième signaux filtrés et ajuster des coefficients dudit filtre adaptatif en fonction dudit au moins un paramètre d'erreur,

c) comparer lesdits premier et deuxième signaux filtrés de manière à détecter un état de dégénérescence,

d) imposer des coefficients de filtre modifiés audit filtre adaptatif en réponse à une détection dudit état de dégénérescence,

e) de manière itérative, redéterminer ledit au moins un paramètre d'erreur en fonction desdits premier et deuxième signaux filtrés, et réajuster lesdits coefficients dudit filtre adaptatif en fonction dudit au moins un paramètre d'erreur.

Avantageusement, ledit au moins un paramètre d'erreur comporte un premier écart entre un module du premier signal filtré et une première constante et un deuxième écart entre un module du deuxième signal filtré et une deuxième constante.

De préférence, ledit état de dégénérescence est détecté lorsqu'une valeur de comparaison desdits premier et deuxième signaux filtrés franchit une valeur de seuil prédéfinie.

Avantageusement, lesdits coefficients de filtre initiaux modifiés comportent au moins un coefficient central non nul.

Avantageusement, le procédé comprend l'étape consistant à calculer ledit au moins un coefficient central non nul à partir d'une valeur sélectionnée d'une rotation selon un angle de rotation et d'une valeur sélectionnée d'une ellipticité.

Avantageusement, le procédé est tel que la valeur sélectionnée de l'angle de rotation couvrent sensiblement l'intervalle $[0, 2\pi]$ et que lesdites valeurs sélectionnées de la dite ellipticité couvrent sensiblement l'intervalle $[0, 2\pi]$.

Le procédé peut aussi être tel que ledit premier signal multiplexé représente un premier signal optique modulé en phase portant un premier flot binaire et que ledit deuxième signal multiplexé représente un deuxième signal optique modulé en phase portant un deuxième flot binaire, ledit deuxième signal optique modulé en phase ayant, à la sortie d'une source qui émet ces deux signaux modulés, une polarisation optique sensiblement perpendiculaire à celle dudit premier signal optique modulé en phase.

Avantageusement, au moins un parmi lesdits premier signal optique modulé en phase et deuxième signal optique modulé en phase est modulé sur plus de 2 niveaux de phases.

De préférences au moins un parmi lesdits premier signal optique modulé en phase et deuxième signal optique modulé en phase est modulé selon une modulation de type BPSK ou QPSK.

L'invention fournit également un dispositif de démultiplexage de polarisation pour récepteur optique cohérent, comprenant:

un filtre adaptatif (24) de démultiplexage de polarisation apte à filtrer un premier signal multiplexé (29) et un deuxième signal multiplexé (30) de manière à produire un premier signal filtré (31) et un deuxième signal filtré (32),

un module d'ajustage itératif (33,34) apte à déterminer au moins un paramètre d'erreur en fonction desdits premier et deuxième signaux filtrés et à ajuster de manière itérative des coefficients dudit filtre adaptatif (24) en fonction dudit au moins un paramètre d'erreur,

un module comparateur (42 et 43) capable de comparer lesdits premier et deuxième signaux filtrés (31,32) de manière à détecter un état de dégénérescence,

un module de commande (44) capable d'imposer des coefficients de filtre modifiés audit filtre adaptatif (24) en réponse à une détection dudit état de dégénérescence.

Selon un mode de réalisation, ce dispositif comporte en outre une chaine de détection cohérente apte à produire deux composantes électriques en tant que premier signal optique multiplexé et deuxième signal optique multiplexé, à partir d'un signal optique multiplexé en polarisation.

Une observation expérimentale à la base de l'invention est que les dysfonctionnements d'un filtre adaptatif fonctionnant comme un démultiplexeur de polarisation sont liés aux valeurs initiales choisies pour les coefficients de filtrage avant leur adaptation par un algorithme. Cette dépendance ne peut être prédite car elle dépend des caractéristiques des signaux à démultiplexer, celles ci évoluant avec les systèmes optiques traversés et au cours du temps. Une idée à la base de l'invention est d'attendre que le dysfonctionnement du démultiplexeur soit détecté au niveau des sorties démultiplexées, sous la forme d'une dégénérescence des signaux filtrés, pour alors réinitialiser les coefficients du filtre. En cas de détection de dégénérescence, des valeurs de coefficients initiaux sont essayées de façon systématique jusqu'à lever la situation de dégénérescence. L'approche proposée présente l'avantage de donner un accès direct aux performances de démultiplexages. Certains modes de réalisation de l'invention présentent l'avantage secondaire de limiter la puissance de calcul nécessaire à la réinitialisation des coefficients du filtre.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

La figure 1 est une représentation schématique d'un système de communication optique utilisant le multiplexage en polarisation dans lequel des modes de réalisation de l'invention peuvent être mis en oeuvre.

La figure 2 représente une chaîne de traitement électronique utilisable dans le système de la figure 1.

La figure 3 représente un démultiplexeur de polarisation constitué d'un filtre adaptatif de structure papillon, utilisable dans la chaîne de traitement de la figure 2.

La figure 4 est une représentation schématique d'une chaîne de rétroaction agissant sur le démultiplexeur de la figure 3.

La figure 5 est une cartographie calculée dans un plan $\theta,\delta$) de zones de dégénérescence de l'algorithme CMA.

La figure 6 représente un procédé de démultiplexage selon un mode de réalisation de l'invention.

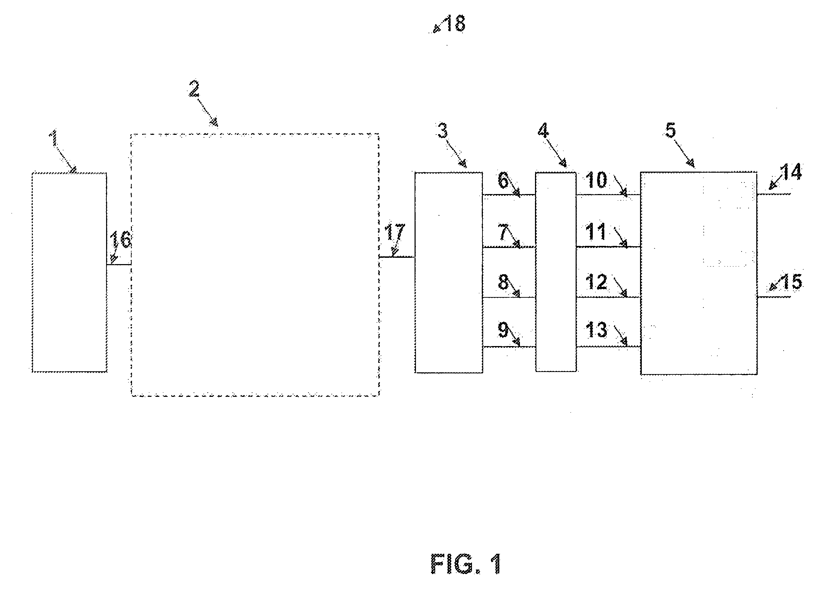

Sur la figure 1, on a représenté schématiquement un système de communication optique utilisant le multiplexage en polarisation. Une source de signaux multiplexées en polarisation 1 émet, par exemple sur une fibre, un multiplex de deux signaux optiques 16 portés par une même longueur d'onde sur deux polarisations optiques sensiblement perpendiculaires. Chacun de ces deux signaux polarisations optiques sensiblement perpendiculaires, Chacun de ces deux signaux porte des données, ou flux binaires. Le signal multiplexé 16 est injecté à l'entrée d'une liaison optique 2 située entre la source 1 qui émet le signal multiplexé 16 et un étage optique 3 d'un récepteur optique cohérent constitué des éléments aux chiffres 3, 4 et 5. L'étape optique 3 délivre quatre signaux electriques analogiques 6, 7, 8 et 9 à l'étage électronique 4 dont la fonction est de transformer les quatre signaux analogiques 6, 7,8 et 9 respectivement en quatre signaux numériques 10,11, 12 et 13. Les signaux digitaux 10, 11,12 et 13 sont appliqués aux quatre entrées d'une chaîne de traitement numérique 5 qui délivre deux signaux numériques 14 et 15. Le récepteur optique cohérent constitué des éléments 3, 4 et 5 est conçu de manière à ce que les signaux électriques numériques 14 et 15 constituent respectivement les données, ou flots binaires, portées par les deux signaux optiques de polarisations optiques perpendiculaires formant le signal multiplexé 16.

Un exemple de réalisation de la source 1 est donné dans « Efficient Mitigation of Fiber Impairments in an Ultra-Long-Haul Transmission of 40Gbit/s Polarization-Multiplexed Data, by Digital Processing in a Coherent Receiver », par G. Charlet et al., OFC'07. Pour chacun des deux signaux de polarisations perpendiculaires émis par la source 1, les données sont codées sur quatre niveaux de phase, l'ensemble des deux signaux réalisant un débit cumulé de 40Gbit/s sur une longueur d'onde (en anglais, QPSK pour Quadrature Phase-Shift Keying). Dans le mode de réalisation présenté ici, nous considérerons pour simplifier que la source 1 n'émet que sur une longueur d'onde, sans que cela soit limitatif; le document cité illustre au contraire la réalisation d'une telle source utilisant 40 longueurs d'onde pour réaliser un débit effectif de 40 fois 40 Gbit/s.

Dans le mode de réalisation présenté, la liaison optique 2 est une liaison à fibres optiques point à point constituée de différents éléments optiques connectés entre eux et non représentés : ces éléments peuvent être par exemple des longueurs de fibres entre lesquelles sont insérés des modules d'amplification des signaux optiques, des modules de compensation de dispersion et d'autres éléments encore. En fait, la nature et le nombre des éléments constituant cette liaison optique ne sont pas limités. Du fait de la propagation dans la liaison optique 2, les deux signaux formant le signal 17 présentent par rapport aux deux signaux multiplexés 16 différentes altérations; ces altérations sont dues à des phénomènes physiques induits par la transmission dans les différents éléments du milieu optique 2. Ces altérations peuvent résulter par exemple de la dispersion chromatique des fibres, de leur PMD (en anglais : Polarization Mode Dispersion), d'autres effets dépolarisants liés à la biréfringence des tronçons de fibres traversés, d'effets non linéaires et d'autres effets encore. Le signal reçu 17 contient donc la superposition de deux signaux optiques qui correspondent aux deux signaux 16 transmis et modifiés du fait de la traversée de la liaison 2. Les altérations induites par la traversée de la liaison 2 sont plus ou moins stables dans le temps. La dispersion chromatique induit une altération relativement stable alors que des phénomènes comme la PMD ou des effets dépolarisants liés à la biréfringence des tronçons de fibres traversés génèrent des modifications plus rapides des caractéristiques des deux signaux constituant le signal 17. En particulier, les deux signaux constituant le signal 17 ne sont plus deux signaux de polarisations linéaires et sensibiement perpendiculaires comme l'étaient les polarisations des deux signaux constituant le signal 16 mais au contraire des signaux de polarisation elliptique, dont l'état de polarisation varie relativement rapidement dans le temps (par exemple, à des fréquences de l'ordre de quelque kHz).

Bien que la liaison 2 ait été décrite dans le mode de réalisation présenté comme une liaison à fibre optique, d'autres milieux de propagation pourraient être considérés ou chiffre 2, utilisant des propagations optiques guidées ou non guidées ou partiellement guidées.

Le signal 17 est transmis à l'étage optique 3. Un tel étage peut être réalisé comme décrit dans le document précédemment cité, « Efficient Mitigation of Fiber impairments in an Ultra-long-Haul Transmission of 40Gbit/s Polarization-Multiplexed Data, by Digital Processing in a Coherent Receiver ». Le signal 17 est séparé par un filtre polariseur selon deux plans de polarisation mutuellement orthogonaux formant localement une composante dite parallèle et une composante dite perpendiculaire. Ces directions parallèle et perpendiculaire font référence à un repère local du filtre polariseur. Ces deux composantes interfèrent respectivement avec la composante parallèle et la composante perpendiculaire d'un oscillateur local. Cette double interférence est réalisée dans deux mélangeurs cohérents couplés à quatre photo détecteurs. Quatre signaux électriques analogiques 6, 7, 8 et 9 sont ainsi obtenus en sortie des quatre photo détecteurs. Les signaux 6 et 7 représentent les parties réelles et imaginaires du signal d'interférence de la composante parallèle de l'oscillateur local avec la composante parallèle du signal 17. Les signaux 8 et 9 représentent les parties réelles et imaginaires du signal d'interférence de la composante perpendiculaire de l'oscillateur local avec la composante perpendiculaire du signal 17.

Au chiffre 4, un étage électrique transforme respectivement les quatre signaux analogiques 6, 7 8 et 9 en quatre signaux numériques 10, 11, 12 et 13. Les quatre signaux 10, 11, 12 et 13 sont appliqués aux quatre entrées de la chaîne de traitement numérique 5.

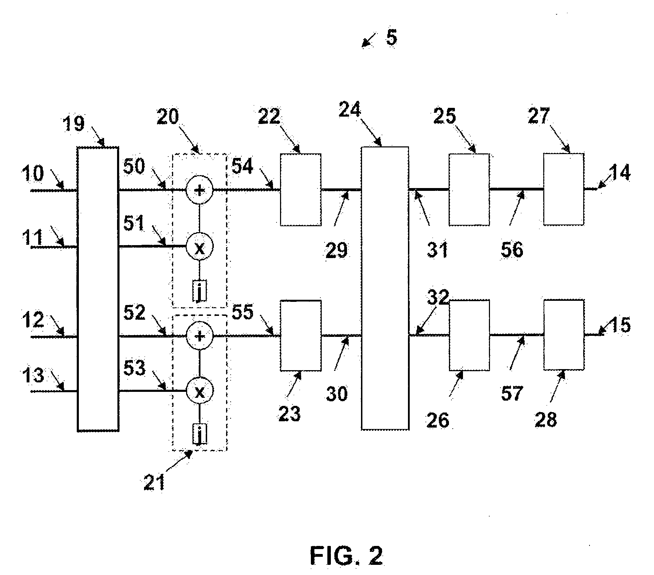

Sur la figure 2 on a représenté un mode de réalisation possible de la chaîne de traitement électronique 5. Les éléments de cette chaîne peuvent par exemple être réalisés à partir de processeurs de signaux numériques (en anglais, DSP pour « digital signal processor ») ou sous la forme de circuits électroniques numériques hybrides (en anglais, customized digital hardware), ou sous la forme logicielle, ou d'autres formes encore.

Au chiffre 19 est représenté un étage électronique de resynchronisation et de normalisation, Un tel étage est par exemple décrit dans le document précité «Digital filters for coherent optical receivers». Il transforme respectivement les signaux reçus 10,11, 12 et 13 en signaux 50, 51, 52, 53. Les signaux 50 et 52 sont des signaux en phase, les signaux 51 et 53 sont des signaux en quadrature de phase.

Aux chiffres 20 et 21 sont représentés schématiquement deux étages de reconstruction d'un signal complexe. L'étage 20 permet d'obtenir le signal 54 dont la valeur peut être représentée par un nombre complexe dont la partie réelle possède la valeur du signal 50 et la partie imaginaire possède la valeur du signal 51. L'étage 21 permet d'obtenir le signal 55 dont la valeur peut être représentée par un nombre complexe dont la partie réelle a pour valeur la valeur du signal 52 et la partie imaginaire a pour voleur la valeur du signal 53. Sur la figure 2, le symbole « i » inscrit dans les étages 20 et 21 est donc le nombre complexe dont le carré est égal à moins un. Sur la figure 2, les symboles « + » et « x » représentent des éléments réalisant respectivement une addition ou une multiplication des valeurs de signaux. Aux chiffres 22 et 23 sont représentés deux étages électroniques de compensation de la dispersion chromatique. De tels étages sont par exemple décrits dans le document précité : « Efficient Mitigation of Fiber Impairments in an Ultra-Long-Haul Transmission of 40Gbit/s Polarization-Multiplexed Data, by Digital Processing in a Coherent Receiver ». Ils peuvent être réalisés comme des filtres à réponse finie. Le rôle des étages 22 et 23 est de compenser respectivement sur les signaux électriques numériques 54 et 55 les distorsions introduites sur les deux signaux optiques propagés dans la liaison 2 du fait de la dispersion chromatique des fibres traversées dans ce système 2. Les étages électriques 22 et 23 délivrent sur leurs sorties respectives les signaux électriques 29 et 30.

Au chiffre 24 est représenté un démultiplexeur de polarisation. Il est constitué d'un filtre, adaptatif recevant les deux signaux 29 et 30 et délivrant les deux signaux 31 et 32. Ce filtre adaptatif présente une structure en « papillon » (en anglais, « butterfly structure ») qui sera décrite plus loin en détail.

Les signaux 31 et 32 sont respectivement appliqués aux entrées des deux étages de récupération de porteuse 25 et 26 (en anglais. « carrier phase estimation »), ceux ci délivrant respectivement les signaux 56 et 57. Ces deux étages viennent compenser les écarts de fréquence résiduels liés au défaut de stabilisation de la fréquence optique d'émission de l'oscillateur local de l'étage optique 3 et de la fréquence optique d'émission de la source 1, De tels étages sont par exemple décrits dans le document précité « Efficient Mitigation of Fiber Impairments in an Ultra-Long-Haul Transmission of 40Gbit/s Polarization-Multiplexed Data, by Digital Processing in a Coherent Receiver ».

Les signaux 56 et 57 sont respectivement appliqués aux deux étages de décision 27 et 28 (en anglais, « symbol estimation) qui délivrent respectivement les signaux 14 et 15, chacun de ces derniers constituant les données, ou flots numériques, ayant servi à moduler les deux signaux optiques émis par la source 1. Des étages de décision ont été décrits dans le document précité « Digital filters for coherent optical receivers ».

Sur la figure 2, la fonction essentielle du démultiplexeur de polarisation 24 est de filtrer les signaux 29 et 30 de manière à récupérer deux signaux 31 et 32 transportant respectivement les données, ou flots numériques, que les deux signaux optiques multiplexes par la source 1 ont transportés dans le réseau optique 2. Le rôle du démultiplexeur 24 est typiquement d'éliminer les effets d'interférence entre ces signaux optiques apparus du fait de leur propagation dans le système optique 2. Dans ce qui suit, les valeurs échantillonnées des signaux 29 et 30 aux entrées du démultiplexeur 24 sont respectivement notées $X_1$ et $X_2$; Les valeurs échantillonnées des signaux 31 et 32 en sortie du démultiplexeur 24 sont notées $Y_1$ et $Y_2$.

Dans le mode de réalisation présenté, le démultiplexeur 24 présente un fonctionnement cadencé au rythme d'une horloge. Nous noterons ici $X_1 (0)$, $X_1 (1)$, ...., $X_1 (N/2 -1))$, $X_1 (N/2)$, $X_1 (N/2 + 1)$,..... $X_1 (N)$, les N + 1 valeurs successives prises par $X_1$ au cours de N+1 temps d'horloge consécutifs. Pour simplifier la description du fonctionnement du démultiplexeur 24, nous supposons par la suite que N est un entier pair : N/2 est donc entier et correspond à la valeur centrale d'une suite de N+1 valeurs entières, comprises entre 0 et N.

Comme on l'a vu, le rôle du démultiplexeur 24 est que les voleurs $Y_1$ et $Y_2$ des deux signaux de sorties 31 et 32 transcrivent respectivement les données transportées par chacun des deux signaux polarisés émis par la source 1.

Pour cela, on peut considérer en première approximation que le milieu optique 2 est constitué d'une succession de milieux biréfringents. La fonction de transfert globale du système 2, en ce qui concerne les effets affectant la polarisation des signaux optiques, peut être décrite de façon approchée par une matrice de Jones de taille 2x2 présentant quatre coefficients complexes. La fonction de transfert recherchée pour le démultiplexeur 24 est typiquement la fonction inverse de la matrice de Jones du système optique 2. On peut donc réaliser un démultiplexeur 24 dont la fonction de transfert est une matrice 2x2 à coefficients complexes, telle qu'au temps d'horloge k correspondant aux échantillons de valeurs $Y_1 (k)$, $Y_2 (k)$, $X_1 (k)$, $X_2 (k)$, on ait

$$\begin{bmatrix} Y_1(k) \\ Y_2(k) \end{bmatrix} = \begin{bmatrix} h_{11} & h_{12} \\ h_{21} & h_{22} \end{bmatrix} \times \begin{bmatrix} X_1(k) \\ X_2(k) \end{bmatrix}$$

En fait, les effets induits par le système optique ? sur la polarisation optique des signaux optiques émis par la source 1, lors de leur propagation dans ce système optique 2, sont plus précisément pris en compte en considérant pour le calcul de $Y_1 (k)$ et $Y_2 (k)$ une égalité de la forme

$$\begin{bmatrix} Y_1(k) \\ Y_2(k) \end{bmatrix} = \begin{bmatrix} h_{11}(0) X_1(k) + h_{12}(0) X_2(k) \\ h_{21}(0) X_1(k) + h_{22}(0) X_2(k) \end{bmatrix} + ... + \begin{bmatrix} h_{11}(N/2) X_1(k-N/2) + h_{12}(N/2) X_2(k-N/2) \\ h_{21}(N/2) X_1(k-N/2) + h_{22}(N/2) X_2(k-N/2) \end{bmatrix} +$$

$$...... + \begin{bmatrix} h_{11}(N) X_1(k-N) + h_{12}(N) X_2(k-N) \\ h_{21}(N) X_1(k-N) + h_{22}(N) X_2(k-N) \end{bmatrix} \qquad \text{Eq. (1)}$$

Dans l'Eq. (1), les 4 x (N+1) coefficients $h_{ij}$ sont des nombres complexes que nous appellerons coefficients du filtre adaptatif. On voit que les valeurs $Y_1 (k)$ et $Y_2 (k)$ au temps d'horloge k sont fonctions des échantillons de valeurs $X_1$ est $X_2$ non seulement au temps d'horloge k mais aussi aux temps d'horloge précédents k-1 à k-N.

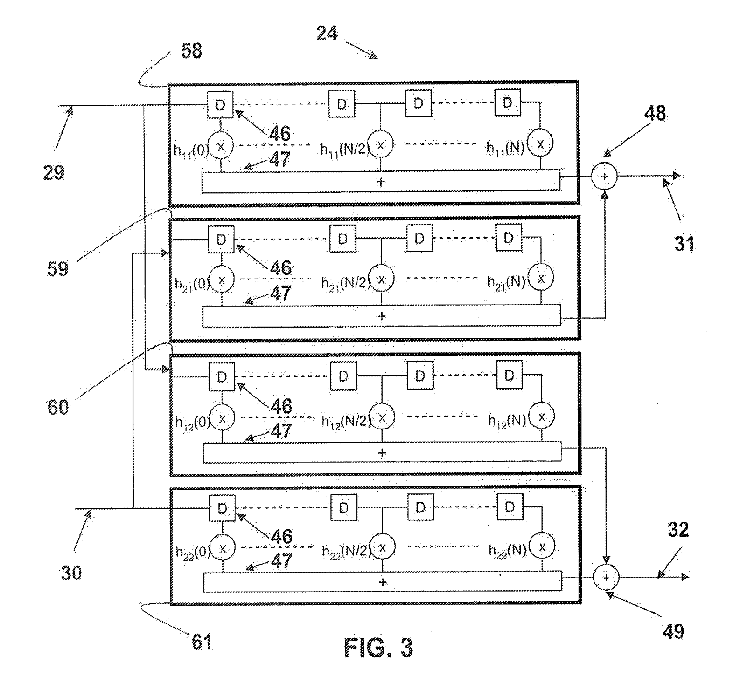

La figure 3 représente schématiquement un mode de réalisation du démultiplexeur de polarisation 24. Les N+1 valeurs de $X_1$ nécessaires au calcul de $Y_1 (k)$ sont stockées dans N+1 registres D au chiffre 46, situés sur une ligne à retard d'un filtre à réponse finie 58. Les N+1 valeurs de $X_2$ nécessaires au calcul de $Y_1 (k)$ sont stockées dans N + 1 registres D au chiffre 46, situés sur une ligne à retard d'un filtre à réponse finie 59. Les N+1 valeurs de $X_1$ nécessaires au calcul de $Y_2 (k)$ sont stockées dans N+1 registres D au chiffre 46, situés sur une ligne à retard d'un filtre à réponse finie 60. Les N+1 valeurs de $X_2$ nécessaires au calcul de $Y_2 (k)$ sont stockées dans N+1 registres D au chiffre 46, situés sur une ligne à retard d'un filtre à réponse finie 61.

Les valeurs stockées dans des registres D des filtre 58 et 60 sont donc les N+1 valeurs $X_1(k)$ à X, (k-N). Les valeurs stockées dans les registres D des filtre 59 et 61 sont donc les N+1 valeurs $X_2(k)$ à $X_2 (k-N)$.

On appelle valeurs précurseurs les valeurs $X_{1,2} (k)$ à $X_{1,2} (k-N/2+1)$ et on appelle valeurs postcurseurs les valeurs $X_{1,2} (k-N/2-1)$ à $X_{1,2} (k-N)$.

Sur le filtre 58, le registre D stockant la valeur $X_1 (k-N/2)$ est appelé registre central. Sur ce filtre, les N/2 registres voisins stockant les valeurs $X_1 (k)$ à $X_1 (k-N/2+1)$ sont appelées registres précurseurs et les N/2 registres voisins stockant les valeurs $X_1 (k-N/2-1)$ à $X_1 (k-N)$ sont appelées registres postcurseurs,

Nous utilisons des définitions analogues pour le filtre 60.

Sur le filtre 59, le registre D stockant la valeur $X_2 (k-N/2)$ est appelé registre central. Sur ce filtre, les N/2 registres voisins stockant les valeurs $X_2 (k)$ à $X_2 (k-N/2+1)$ sont appelés registres précurseurs et les N/2 registres voisins stockant les valeurs $X_2 (k-N/2-1)$ à $X_2 (k-N)$ sont appelés registres postcurseurs.

Nous utilisons des définitions analogues pour le filtre 61.

Sur le filtre 58, le coefficient central $h_{11}(k-N/2)$ est appelé coefficient central. Sur ce filtre, les N/2 coefficients voisins $h_{11}(k)$ à $h_{11} (k-N/2+1)$ sont appelés coefficients précurseurs et les N/2 registres voisins stockant les valeurs $h_{11} (k-N/2-1)$ à $h_{11} (k-N)$ sont appelés coefficients postcurseurs.

Sur le Filtre 59, le coefficient central $h_{21}(k-N/2)$ est appelé coefficient central. Sur ce filtre, les N/2 coefficients voisins $h_{21}(k)$ à $h_{21} (k-N/2+1)$ sont appelés coefficients précurseurs et les N/2 registres voisins stockant les valeurs $h_{21} (k-N/2-1)$ à $h_{21} (k-N)$ sont appelés coefficients postcurseurs.

Sur le filtre 60, le coefficient central $h_{12}(k-N/2)$ est appelé coefficient central. Sur ce filtre, les N/2 coefficients voisins $h_{12}(k)$ à $h_{12}(k-N/2+1)$ sont appelés coefficients précurseurs et les N/2 registres voisins stockant les valeurs $h_{12}(k-N/2-1)$ à $h_{12}(k-N)$ sont appelés coefficients postcurseurs.

Sur le filtre 61, le coefficient central $h_{22}(k-N/2)$ est appelé coefficient central. Sur ce filtre, les N/2 coefficients voisins $h_{22}(k)$ à $h_{22}(k-N/2+1)$ sont appelés coefficients précurseurs et les N/2 registres voisins stockant les valeurs $h_{22}(k-N/2-1)$ à $h_{22}(k-N)$ sont appelés coefficients postcurseurs.

Chacun des filtres 59, 60, 61 et 62 du démultiplexeur 24 fonctionne comme un registre à décalage à N+1 niveaux dont un mode de réalisation est schématiquement représenté sur la figure 3. Chaque valeur des N+1 registres au chiffre 46 de chaque ligne à retard est multipliée par un coefficient $h_{ij}$ correspondant. Les résultats de ces produits pour chaque ligne à retard sont sommés dans l'additionneur au chiffre 47. Le signal 29 de valeur $X_1$ et correspondant à la polarisation parallèle de l'étage optique 3 est couplé aux filtres 58 et 60. Le signal 30 de voleur $X_2$ et correspondant à la polarisation perpendiculaire de l'étage optique 3 est couplé aux filtres 59 et 61. Les filtres 58 et 60 contiennent dans chacun de leurs N+1 registres D respectifs, N+1 échantillons successifs de valeurs de $X_1$. Les filtres 59 et 61 contiennent dans chacun de leurs N+1 registres D respectifs, N+1 échantillons successifs de valeurs de $X_2$. Les sorties des additionneurs 47 associés aux filtres 58 et 60 sont combinées par l'additionneur 48 pour former le signal de sortie 38 de valeur $Y_1$ correspondant ou premier signal polarisé émis par la source 1. De façon analogue, les sorties des additionneurs 47 associés aux filtres 59 et 61 sont combinées par l'additionneur 49 pour former le signal de sortie 32 de valeur $Y_2$ correspondant au deuxième signal polarisé émis par la source 1. Les deux additionneurs 47 associés aux filtres 58 et 60 et l'additionneur 48 peuvent être combinés, Il en est de même pour les deux additionneurs 47 associés aux filtres 59 et 61 avec l'additionneur 49.

Dans le mode de réalisation présenté, le calcul des coefficients hij est réalisé selon un algorithme à module constant (en anglais, CM pour « Constant Modulus Algorithm ») décrit dans « Self-Recovering equalization and carrier tracking in two-dimensional data communication systems » par D. N. Godard (IEEE Transactions on communications, Vol. COM-28, No. 11, Novembre 1980, pages 1867 à 1875). Il s'agit d'un algorithme de calcul itératif également utilisé pour la détection cohérente dans le document précité « Digital filters for coherent optical receivers » de Seb. J Savory. Suivant cet algorithme, les coefficients hij sont ajustés de façon itérative de manière à ce que des normes de $Y_1$ et $Y_2$ tendent vers une même valeur définie comme unité. Le démultiplexeur 24, lorsqu'il utilise l'algorithme CMA, est donc un démultiplexeur de polarisation qui réalise en même temps une fonction d'égalisation.

L'algorithme CMA tente de minimiser la valeur des termes d'erreur

$$\varepsilon_{y1}=1-\left|Y_1\right|^2 \text{ et } \varepsilon_{y2}=1-\left|Y_2\right|^2 \qquad \text{Eq. (2)}$$

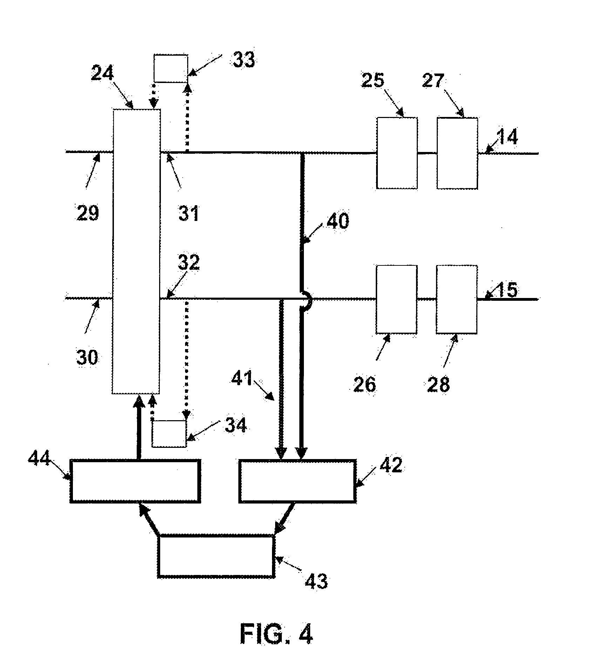

Sur la figure 4 sont représentés deux modules CMA aux chiffres 33 et 34. Le module 33 compare une norme de la valeur $Y_1$ à l'unité pour générer le terme d'erreur $\varepsilon_{Y1}$ qui est utilisé pour ajuster les coefficients $h_{11}$ et $h_{12}$ qui participent au calcul de $Y_1$ et $Y_2$ respectivement. De façon indépendante, le module 34 compote la norme de la valeur $Y_2$ à l'unité pour générer le terme d'erreur $\varepsilon_{Y2}$ qui est utilisé pour ajuster les coefficients $h_{21}$ et $h_{22}$ qui participent au calcul de $Y_1$ et $Y_2$ respectivement.

Selon l'algorithme CMA, les valeurs des coefficients $h_{ij}$ sont recalculées de façon itérative par les modules 33 et 34 de la façon suivante :

$$\begin{aligned}
h_{11}' &= h_{11} + \mu\varepsilon_{Y1}Y_1X_1^* \\
h_{12}' &= h_{12} + \mu\varepsilon_{Y1}Y_1X_2^* \\
h_{21}' &= h_{21} + \mu\varepsilon_{Y2}Y_2X_1^* \\
h_{22}' &= h_{22} + \mu\varepsilon_{Y2}Y_2X_2^*
\end{aligned} \qquad \text{Eq. (3)}$$

Dans ces égalités, les coefficients $\underline{h_{ij}}'$ représentent les valeurs actualisées des coefficients de filtre $h_{ij}(0)$ à $h_{ij}(N)$ les termes $\underline{h_{ij}}$ représentent les valeurs courantes à actualiser des coefficients de filtre $h_{ij}(0)$ à $h_{ij}(N)$, $\mu$ est un paramètre de convergence et les termes $\underline{X_i}^*$ représentent les conjuguées des valeurs des échantillons $X_i(k)$ à $X_i(k-N)$.

Bien que non explicitement indiqué sur la représentation simplifiée de la figure 4, les coefficients de registre

actualisés $h_{ij}$ sont calculés en fonction des échantillons de valeurs $X_i(k)$ à $X_i(k-N)$ comme indiqué dans les égalités précédentes.

Dans le cas particulier où tous les coefficients précurseurs et tous les coefficients postcurseurs sont nuls, $Y_1(k)$ et $Y_2(k)$ sont calculés, comme indiqué par l'Eq. (1), à partir des valeurs de $X_1(k-N/2)$ et $X_2(k-N/2)$. Cela signifie que les valeurs $Y_{1,2}$ fournies au temps d'horloge k sont calculées à partir des valeurs $X_{1,2}$ reçues par le filtre adaptatif au temps horloge k-N/2. En d'autres termes, le filtre adaptatif induit une latence globale de N/2 temps d'horloge.

Le rôle des coefficients précurseurs et postcurseurs, quand ils ne sont pas tous nuls, est de permettre au filtre adaptatif de compenser l'ensemble des effets physiques perturbateurs qui ont introduit une interférence entre N+1 symboles temporellement successifs centrés sur le symbole au temps d'horloge k-N/2. Ces effets peuvent être d'origine optique ou électrique et peuvent avoir une origine en tout lieu entre la source optique 1 et le démultiplexeur 24.

Dans le mode de réalisation présenté, le calcul de l'Eq. (1) est réalisé en deux temps. Dans un premier temps, une valeur initiale $Y_{1I}(k)$ de $Y_1(k)$ et une valeur initiale $Y_{2I}(k)$ de $Y_2(k)$ sont calculées selon l'Eq. (1) en utilisant des coefficients de filtres initiaux qui soient des coefficients centraux, l'un au moins de ces coefficients centraux étant non nul. Dans ce calcul initial, tous les coefficients précurseurs initiaux et tous les coefficients postcurseurs initiaux sont nuls. Dans un deuxième temps, l'algorithme CMA calcule de façon itérative, en parlant des valeurs initiales $Y_{2I}(k)$ de $Y_2(k)$, des valeurs itérées des coefficients centraux, précurseurs et postcurseurs.

En réponse à la détection d'un état de dégénérescence des signaux filtrés par le démultiplexeur, on calcule des coefficients de filtre initiaux modifiés , à partir desquels l'algorithme CMA recommence un calcul itératif. On essai ainsi des jeux successifs de coefficients initiaux jusqu'à faire disparaître l'état de dégénérescence des signaux démultiplexés.

Bien que les seuls coefficients non nuls soient dans le mode de réalisation présenté les coefficients centraux $h_{ij}(k-N/2)$, dans la série des rangs k-N à k, on pourrait utiliser dans un autre mode de réalisation, un algorithme du type de celui l'Eq. (1) pour lequel plusieurs coefficients initiaux non nuls seraient aussi des coefficients précurseurs ou postcurseurs. Il peut donc être avantageux de choisir comme coefficients initiaux des combinaisons de signaux précurseurs et/ou centraux et/ou postcripteurs. Le choix particulier des coefficients initiaux non nuls sera typiquement fait en fonction des altérations physiques intervenues sur les signaux à démultiplexer, entre la source 1 et le démultiplexeur 25. Par exemple, sil les effets physiques se réduisent essentiellement à de la biréfringence optique, on aura plutôt intérêt à partir d'une situation où seuls les coefficients centraux sont non nuls, car la matrice de Jones décrivant les effets du système de communication optique 2 est alors proche de l'inverse d'une matrice du type décrit par l'Eq. (4). D'autres modes de réalisation pourraient également utiliser des algorithmes itératifs décrits par une équation différente de l'Eq. (1).

Les coefficients de filtre initiaux sont donc définis, dans le cadre de l'invention, comme les coefficients non nuls d'un filtre adaptatif permettant de calculer des valeurs initiales $Y_{1I}(k)$ de $Y_1(k)$, ces valeurs initiales étant ensuite utilisées par un algorithme itératif responsable de l'adaptation ultérieure des coefficients du filtre adaptatif, de manière à calculer par itération, des valeurs ultérieures de $Y_1(k)$ et de $Y_1(k)$. Si suite à ce calcul , on détecte une situation de dégénérescence, on essai un nouveau jeux de coefficients de filtres initiaux, ou coefficients de filtres initiaux modifiés. Plusieurs modifications successives peuvent être nécessaires pour lever la dégénérescence.

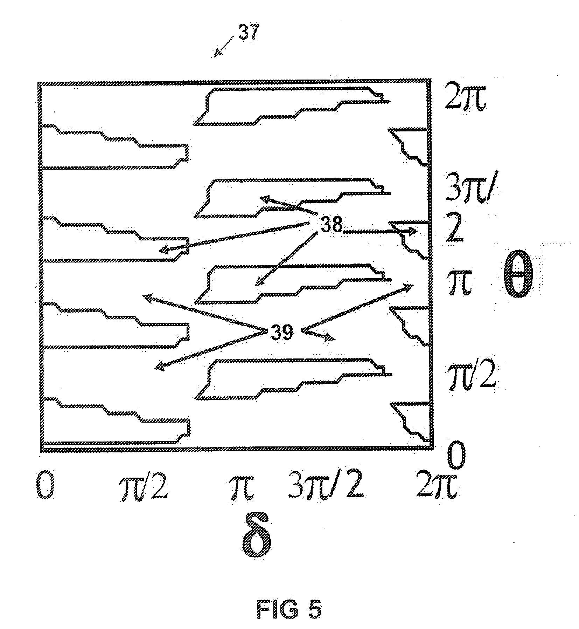

La figure 5 est une cartographie qui illustre les performances de démultiplexage du démultiplexeur 24, dans le cas où l'algorithme CMA est utilisé. Pour cela, on a dans un premier temps enregistré des valeurs expérimentales de $X_1(k)$ à $X_1(k-N)$ et $X_2(k)$ à $X_2(k-N)$, obtenues dans le cas particulier où la liaison optique 2 est constitué d'une liaison sur fibre optique sur laquelle on a propagé deux signaux multiplexés en polarisation, chaque signal étant module à 100Gbit/s suivant le format QPSK. La longueur de fibre est de 400km, sa PMD est de 20ps. La détection est réalisée en utilisant un détecteur cohérent analogue à l'ensemble décrit aux chiffres 3, 4 et 5 de la figure 1.

Dans un deuxième temps, les valeurs $Y_1(k)$ et $Y_2(k)$ sont calculées à partir des valeurs expérimentales précédentes selon l'Eq. (1) où les coefficients hij sont ajustés de façon itérative en utilisant l'algorithme CMA.

La performance de l'algorithme CMA est alors étudiée par rapport ou choix initial des coefficients $h_{ij}$. Les valeurs initiales des coefficients hij utilisées pour le démultiplexeur 24 au moment où l'algorithme CMA est mis en route sont choisies, dans le mode de réalisation présenté, de manière à ce que tous les coefficients hij précurseurs et postcurseurs soient nuls, les seuls coefficients de filtres initiaux, éventuellement modifiés, étant les quatre coefficients centraux $h_{11}(N/2)$, $h_{12}(N/2)$, $h_{21}(N/2)$ et $h_{22}(N/2)$. Mais comme il a été indiqué précédemment, d'autres choix de coefficients initiaux non nuls seraient possibles. Il est possible d'écrire la matrice centrale sous la forme d'une matrice de rotation selon l'égalité

$$\begin{bmatrix} h_{11}(N/2) & h_{12}(N/2) \\ h_{21}(N/2) & h_{21}(N/2) \end{bmatrix} = \begin{bmatrix} \cos\theta & e^{-j\delta}\sin\theta \\ -e^{j\delta}\sin\theta & \cos\theta \end{bmatrix} \qquad \text{Eq. (4)}$$

Selon les voleurs prises par l'angle de rotation $\theta$ et le paramètre de correction d'ellipticité $\delta$, on obtient différentes valeurs complexes pour les quatre coefficients centraux initiaux, c'est à dire avant que ne soient recalculées de façon itérative ces voleurs et celles des coefficients précurseurs et postcripteurs, selon l'algorithme CMA Sur la figure 5 sont représentés les résultats calculés de convergence de l'algorithme CMA, pour les valeurs expérimentales de $X_{1,2}$ précédemment indiquées et pour différentes voleurs de $\theta$ et $\delta$, chacune prises dans la plage 0 à $2\pi$. Les zones au chiffre 38 correspondent à des couples de valeurs $(\theta, \delta)$ pour lesquelles les modules CMA 33 et 34 adaptent les coefficients du démultiplexeur 24 de façon satisfaisante, en séparant correctement les deux signaux 31 et 32. A l'inverse, les zones au chiffre 39 correspondent des couples de valeurs $(\theta, \delta)$ pour lesquelles les modules CMA 33 et 34 échouent à adapter les coefficients du démultiplexeur 24 de manière à séparer correctement les deux signaux 31 et 32. Dans ce dernier cas, on observe un phénomène de dégénérescence, les deux signaux 31 et 32 en sortie du démultiplexeur 24 présentant des valeurs $Y_1$ et $Y_2$ identiques. Dans ce cas, les deux signaux 31 et 32 portent les mêmes données correspondant aux données portées par un seul des deux signaux optiques multiplexés en polarisation par la source 1.

La figure 4 décrit schématiquement comment ce comportement défectueux est corrigé dans le mode de réalisation de l'invention présenté ici. Deux dérivations 40 et 41 permettent d'appliquer les signaux 31 et 32 aux deux entrées d'un module de comparaison 42 qui compare les valeurs $Y_1(k)$ et $Y_2(k)$ et intègre leur différence pendant plusieurs temps d'horloge k. Le module 42 délivre donc un signal de comparaison qui s'approche d'une valeur caractéristique dans le cas où le démultiplexeur 24 converge vers un état dégénéré où les signaux 31 et 32 sont identiques. Le signal de comparaison peut être un signal décrivant la corrélation entre les signaux 31 et 32, ou la distance entre les valeurs $Y_1$ et $Y_2$ ou tout autre type de signal de comparaison. Le signal de comparaison délivré par le module 42 est appliqué au module de seuillage 43. Si le signal de comparaison devient inférieur à une valeur prédéfinie par le module de seuillage, celui ci délivre une indication de réinitialisation au module de réinitialisation 44. Le module 44 possède la mémoire des couples de valeurs $(\theta, \delta)$ préalablement utilisés pour calculer des coefficients de filtre initiaux. Le module 44 génère alors un couple de valeurs $(\theta, \delta)$ différent des couples précédemment utilisés, et applique l'Eq. (4) pour générer des coefficients de filtre initiaux modifiés, pour le démultiplexeur 24 à partir du nouveau couple $(\theta, \delta)$. Les voleurs des coefficients précurseurs et postcurseurs $h_{ij}$ sont simultanément remises à zéro. D'autres choix de réinitialisation pour les valeurs des coefficients précurseurs et postcurseurs seraient toutefois possibles. Lors de la réinitialisation du filtre adaptatif, le module de comparaison 42 est également réinitialisé. Puis l'adaptation itérative des coefficients du filtre par les modules CMA 33 et 34 reprend normalement. La comparaison des signaux par le module 42 peut reprendre ou après une période de temporisation prédéfinie.

Comme on le voit sur le résultat expérimental de la figure 5, un balayage systématique des couples de valeurs $(\theta, \delta)$ au fil des réinitialisations successives du filtre adaptatif conduit inévitablement à rencontrer des valeurs des coefficients de filtre initiaux modifiées, compatibles avec la convergence du calcul itératif d'adaptation des coefficients $h_{ij}$ par les modules CMA 33 et 34. Le balayage des valeurs de $(\theta, \delta)$ peut être un balayage régulier, par exemple un balayage de $\theta$ entre 0 et $2\pi$ réalisé successivement pour des valeurs croissantes de $\delta$ entre 0 et $2\pi$. Mais d'autres séquences de balayage sont possibles, y compris des tirages aléatoires de voleurs pour $\theta$ et/ou $\delta$ ou toutes autres méthodes. Les résultats expérimentaux de la figure 5 font apparaître une périodicité de $\pi$ selon $\theta$ qui a pour origine physique l'indétermination de $\pi/2$ de la rotation des polarisations dans le cas d'une transmission d'un signal multiplexé en polarisation. Il s'ensuit qu'on peut se contenter de balayer les valeurs de $\theta$ dans l'intervalle 0 à $\pi/2$ par exemple. De plus, dans cet intervalle 0 à $\pi/2$ pour $\theta$, la figure 5 présente également une périodicité de $\pi$ en $\delta$; on peut donc également se limiter par exemple à des voleurs de $\delta$ comprises en 0 et $\pi$.

De fait, l'invention n'est pas limitée à des modules 33 et 34 qui utilisent l'algorithme itératif de type CMA. D'autres algorithmes d'adaptation des coefficients $h_{ij}$ peuvent être utilisés, pouvant justifier d'adapter la méthode de réinitialisation des coefficients du filtre adaptatif.

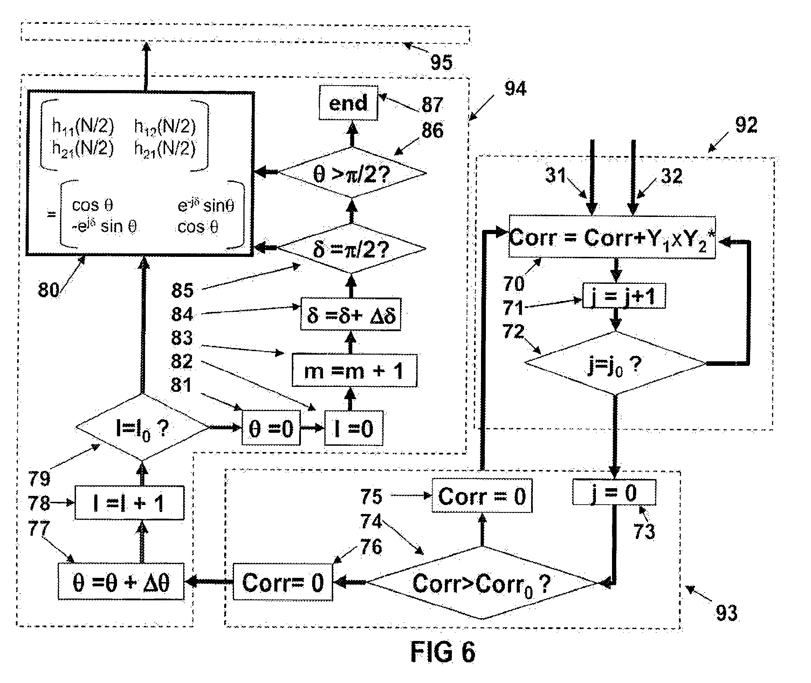

La figure 6 représente schématiquement un mode de réalisation du procédé de démultiplexage selon l'invention, Sur figure 6, un algorithme décrit une étape de comparaison 92, une étape de seuillage 93 et une étape de calcul de coefficients initiaux 94. Les valeurs des deux signaux 31 et 32 sont utilisées dans une étape de sommation 70. Dans cette étape on calcule une somme cumulée Corr, sur $i_0$ valeurs de corrélations, ces $i_0$ valeurs de corrélation décrivant la corrélation des signaux 31 et 32 au cours de $i_0$ temps d'horloge successifs. Chaque fois qu'une valeur de corrélation est rajoutée à la somme cumulée, on incrémente d'une unité, dans une étape 71, la valeur d'un paramètre i de comptage des valeurs de corrélation sommées. La valeur de i ainsi incrémentée est comparée dans une étape 72 à un nombre prédéfini $i_0$ supérieur à 1. Si i est inférieur à $i_0$, on retourne à l'étape 70 pour rajouter à la somme cumulée déjà obtenue, une valeur de corrélation correspondant au temps d'horloge suivant. Lorsque i atteint la valeur $i_0$, on passe à une étape 73 de remise à zéro du paramètre j. Les étapes 70, 71 et 72 constituent ensemble l'étape de comparaison 92.

Lorsque le paramètre i a été remis à zéro, on compare dans une étape 74, la somme cumulée Corr obtenue par sommation sur $i_0$ temps d'horloge successifs à une valeur de référence $Corr_0$. Si Corr est inférieur à $Corr_0$, l'état de dégénérescence n'est pas detecté, la valeur de Corr est remise à zéro dans une étape 75 suivie d'un retour à l'étape 70 où on redémarre à partir de zéro, une somation sur $j_0$ temps d'horloge suivants. Si Corr est supérieur ou égal à $Corr_0$, l'état de dégénérescence est détecté, on remet à zéro dans une étape 76 la valeur de Corr. Les étapes 73, 74, 75 et 76 constituent ensemble l'étape de seuillage 93.

Après que l'on a remis à zéro à l'étape 76 la valeur de Corr, on incrémente dans une étape 77 la valeur de l'ongle de rotation θ d'un incrément d'angle Δθ. On incrémente ensuite d'une unité, dans une étape 78, un paramètre l de comptage des incréments d'angle. Lors d'une étape 79, on compare la valeur incrémentée de l à un nombre entier prédéfini $l_0$. Si l est inférieur à $l_0$, on calcule dans une étape 80, des coefficients de filtre initiaux modifiés $h_{11}$, $h_{12}$, $h_{21}$ et $h_{22}$ en fonction des valeurs courantes de θ et δ et en utilisant l'Eq. (4). Si l a atteint $l_0$, on remet 0 à zéro dans une étape 81 et on remet l à zéro dans une étape 82, Dans une étape 83, on incrémente alors d'une unité un paramètre m de comptage des incréments d'ellipticité- Puis, dans une étape 84, on incrémente l'ellipticité δ d'un incrément Δδ. Dans une étape 85, on compare ensuite la valeur incrémentée de δ à π/2. Si cette valeur est inférieure ou égale à π/2, on retourne à l'étape 80 pour recalculer des coefficients de filtre initiaux modifiés à partir des valeurs courantes de θ et δ. Si δ a dépassé la valeur π/2, on compare dans une étape 86, la valeur de θ à π/2, Si θ est inférieur ou égale à π/2, on retourne à nouveau à l'étape 80 pour recalculer des coefficients de filtre initiaux modifiés à partir des valeurs courantes de θ et δ et de l'Eq. (4). Si θ est supérieur à π/2, un étape 87 permet de déclencher un signal d'alarme pour indiquer à un gestionnaire d'équipement l'impossibilité à démultiplexer correctement les deux signaux 29 et 30. Les étapes 77, 78, 79, 80, 81, 82, 83, 84, 85, 86 et 87 constituent ensemble, l'étape de calcul des coefficients initiaux 94.

Chaque fois qu'à l'étape 80, on a recalculé des coefficients de filtre initiaux modifiés , on réinitialise dans une étape 95 et selon ces valeurs recalculées, la valeurs des coefficients de filtres initiaux modifié du filtre adaptatif du démultiplexeur de polarisation. Lors de cette étape 95, les coefficients précurseurs et postcurseurs du filtre adaptatif sont par exemple tous remis à zéro.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs unités ou modules peuvent être représentés par un même élément matériel.

Dans les revendications, tout chiffre de référence entre parenthèses ne saurait être interprété comme une limitation de la revendication.

## Revendications

1. Procédé de démultiplexage de polarisation pour récepteur optique cohérent, comprenant les étapes consistant en:

filtrer dans un filtre adaptatif de démultiplexage de polarisation un premier signal multiplexé et un deuxième signal multiplexé de manière à produire un premier signal filtré et un deuxième signal filtré, lesdits premier signal multiplexé et deuxième signal multiplexé constituant deux composantes électriques obtenues par une chaîne de détection cohérente d'un signal optique multiplexé en polarisation, de manière itérative, déterminer au moins un paramètre d'erreur en fonction desdits premier et deuxième signaux filtrés, et ajuster des coefficients dudit filtre adaptatif en fonction dudit au moins un paramètre d'erreur,
lesdits coefficients étant associés à des échantillons dédits signaux d'entrée filtrés pris à des temps d'horloges successifs,
comparer lesdits premier et deuxième signaux filtrés entre eux de manière à détecter un état de dégénérescence, calculer quatre coefficients centraux non nuls associés à un temps d'horloge central au sein desdits temps d'horloge successifs à partir d'une valeur sélectionnée d' un angle de rotation θ et d'une valeur sélectionnée d'une ellipticité δ, les quatre coefficients centraux formant une matrice de rotation

$$\begin{bmatrix} \cos\theta & e^{-j\delta}\sin\theta \\ -e^{j\delta}\sin\theta & \cos\theta \end{bmatrix}$$

imposer des coefficients de filtre initiaux modifiés audit filtre adaptatif en réponse à une détection dudit état de dégénérescence, lesdits coefficients de filtre initiaux modifiés comportant lesdits quatre coefficients centraux non nuls,
de manière itérative, redéterminer ledit au moins un paramètre d'erreur en fonction desdits premier et deuxième signaux filtrés, et réajuster lesdits coefficients dudit filtre adaptatif en fonction dudit au moins un paramètre d'erreur,
sélectionner des valeurs d'angle de rotation et des valeurs d'ellipticité successivement différentes en réponse à des détections successives dudit état de dégénérescence, pour calculer à chaque fois ledit coefficient central non nul.

2.  Procédé selon la revendication 1, **caractérisé par le fait que** ledit au moins un paramètre d'erreur comporte un premier écart entre un module du premier signal filtré et une première constante et un deuxième écart entre un module du deuxième signal filtré et une deuxième constante.

3.  Procédé selon la revendication 1 ou 2, **caractérisé par le fait que** ledit état de dégénérescence est détecté lorsqu'une valeur de comparaison desdits premier et deuxième signaux filtrés franchit une valeur de seuil prédéfinie,

4.  Procédé selon les revendications 1 à 3, **caractérisé par le fait que** les valeurs successivement sélectionnées de l'angle de rotation couvrent un intervalle d'amplitude [0, [pi]/2] et que lesdites valeurs successivement sélectionnées de la dite ellipticité couvrent sensiblement l'intervalle [0, [pi]].

5.  Procédé selon l'une des revendications 1 à 4, **caractérisé par le fait que** ledit premier signal multiplexé représente un premier signal optique modulé en phase portant un premier flot binaire et que ledit deuxième signal multiplexé représente un deuxième signal optique modulé en phase portant un deuxième flot binaire, ledit deuxième signal optique modulé en phase ayant, à la sortie d'une source qui émet ces deux signaux modulés, une polarisation optique sensiblement perpendiculaire à celle dudit premier signal optique modulé en phase.

6.  Procédé selon la revendication 5, **caractérisé par le fait qu'**au moins un parmi lesdits premier signal optique modulé en phase et deuxième signal optique modulé en phase est modulé sur plus de 2 niveaux de phases.

7.  Procédé selon la revendication 5, **caractérisé par le fait qu'**au moins un parmi lesdits premier signal optique modulé en phase et deuxième signal optique modulé en phase est modulé selon une modulation de type BPSK ou QPSK.

8.  Dispositif de démultiplexage de polarisation pour récepteur optique cohérent, comprenant:

    un filtre adaptatif (24) de démultiplexage de polarisation apte à filtrer un premier signal multiplexé (29) et un deuxième signal multiplexé (30) de manière à produire un premier signal filtré (31) et un deuxième signal filtré (32),
    un module d'ajustage itératif (33,34) apte à déterminer au moins un paramètre d'erreur en fonction desdits premier et deuxième signaux filtrés et à ajuster de manière itérative des coefficients dudit filtre adaptatif (24) en fonction dudit au moins un paramètre d'erreur,
    lesdits coefficients étant associés à des échantillons dédits signaux d'entrée filtrés pris à des temps d'horloges successifs, comprenant également
    un module comparateur (42 et 43) capable de comparer lesdits premier et deuxième signaux filtrés (31,32) entre eux de manière à détecter un état de dégénérescence,
    un module de commande (44) capable de calculer quatre coefficients centraux non nuls associés à un temps d'horloge central au sein desdits temps d'horloge successifs à partir d'une valeur sélectionnée d'un angle de rotation $\theta$ et d'une valeur sélectionnée d'une ellipticité $\delta$, les quatre coefficients centraux formant une matrice de rotation

$$\begin{bmatrix} \cos\theta & e^{-j\delta}\sin\theta \\ -e^{j\delta}\sin\theta & \cos\theta \end{bmatrix},$$

    d'imposer des coefficients de filtre d'imposer des coefficients de filtre initiaux modifiés audit filtre adaptatif en réponse à une détection dudit état de dégénérescence, lesdits coefficients de filtre initiaux modifiés comportant lesdits quatre coefficients centraux non nuls et de sélectionner des valeurs d'angle de rotation et des valeurs d'ellipticité successivement différentes en réponse à des détections successives dudit état de dégénérescence, pour calculer à chaque fois ledit coefficient central non nul.

9.  Dispositif selon la revendication 8, comportant en outre une chaîne de détection cohérente apte à produire deux composantes électriques en tant que premier signal optique multiplexé et deuxième signal optique multiplexé à partir d'un signal optique multiplexé en polarisation.

**Patentansprüche**

1. Verfahren zur Polarisationsdemultiplexierung für einen kohärenten optischen Empfänger, folgende Schritte umfassend, die daraus bestehen:

   in einem adaptativen Filter zur Polarisationsdemultiplexierung ein erstes gemultiplextes Signal und ein zweites gemultiplextes Signal so zu filtern, dass ein erstes gefiltertes Signal und ein zweites gefiltertes Signal erzeugt wird, wobei das besagte erste gemultiplexte Signal und das besagte zweite gemultiplexte Signal zwei elektrische Komponenten darstellen, die durch eine kohärente Detektionskette eines durch Polarisation gemultiplexten optischen Signals erhalten werden,
   auf iterative Weise zumindest einen Fehlerparameter entsprechend dem besagten ersten und zweiten gefilterten Signal zu bestimmen und die Koeffizienten des besagten adaptativen Filters entsprechend dem besagten wenigstens einen Fehlerparameters abzugleichen,
   wobei besagte Koeffizienten an Proben der besagten gefilterten Eingangssignale gebunden sind, die zu aufeinanderfolgenden Uhrzeiten genommen werden,
   das besagte erste und zweite gefilterte Signal miteinander zu vergleichen, so dass ein Entartungszustand ausgemacht wird,
   vier zentrale Koeffizienten zu berechnen, die nicht gleich Null sind und die an eine zentrale Uhrzeit innerhalb der besagten aufeinanderfolgenden Uhrzeiten ausgehend von einem ausgewählten Wert eines Rotationswinkels $\theta$ und einem ausgewählten Wert einer Elliptizität ö gebunden sind, wobei die vier zentralen Koeffizienten eine Rotationsmatrix bilden.

$$\begin{bmatrix} \cos\theta & e^{-j\delta}\sin\theta \\ -e^{j\delta}\sin\theta & \cos\theta \end{bmatrix}$$

   die modifizierten ursprünglichen Filterkoeffizienten als Antwort auf eine Ortung des besagten Entartungszustands dem besagten adaptativen Filter aufzuerlegen, wobei die modifizierten ursprünglichen Filterkoeffizienten, die besagten vier zentralen Koeffizienten,
   die nicht gleich Null sind, enthalten,
   auf iterative Weise den besagten wenigstens einen Fehlerparameter entsprechend dem besagten ersten und zweiten gefilterten Signal neu zu bestimmen und besagte Koeffizienten des besagten adaptativen Filters nach wenigstens einem Fehlerparameter anzugleichen,
   die Rotationswinkelwerte und die Elliptizitätswerte sukzessive zu wählen, die als Antwort auf die sukzessiven Ortungen des besagten Entartungszustands unterschiedlich sind, um jedes Mal den besagten zentralen Koeffizienten zu berechnen, der nicht gleich Null ist.

2. Verfahren nach Anspruch 1, **dadurch gekennzeichnet, dass** besagter wenigstens einer Fehlerparameter eine erste Abweichung zwischen einem Modul des ersten gefilterten Signals und einer ersten Konstante aufweist und eine zweite Abweichung zwischen einem Modul des zweiten gefilterten Signals und einer zweiten Konstante.

3. Verfahren nach Anspruch 1 oder 2, **dadurch gekennzeichnet, dass** besagter Entartungszustand ausgemacht wird, wenn ein Vergleichswert zwischen dem besagten ersten und dem besagten zweiten gefilterten Signal einen vordefinierten Schwellenwert überschreitet.

4. Verfahren nach Anspruch 1 bis 3, **dadurch gekennzeichnet, dass** die sukzessive ausgewählten Werte des Rotationswinkels ein Amplitudeninterval abdecken [0, [pi]/2] und dass besagte sukzessive ausgewählte Werte der besagten Elliptizität deutlich das Intervall [0, [pi]] abdecken.

5. Verfahren nach einem beliebigen der Ansprüche 1 bis 4, **dadurch gekennzeichnet, dass** das besagte erste gemultiplexte Signal ein erstes gleichphasiges moduliertes optisches Signal darstellt, das einen ersten Binärstrom trägt, und dass besagtes zweites gemultiplextes Signal ein zweites gleichphasiges moduliertes optisches Signal darstellt, das einen zweiten Binärstrom trägt, wobei besagtes zweites gleichphasiges moduliertes optisches Signal am Ausgang einer Quelle, die diese modulierten Signale ausstrahlt, eine optische Polarisation aufweist, die deutlich senkrecht zu der des besagten ersten gleichphasigen modulierten optischen Signals steht.

**6.** Verfahren nach Anspruch 5, **dadurch gekennzeichnet, dass** wenigstens eins unter besagtem ersten gleichphasigem moduliertem optischen Signal und besagtem zweiten gleichphasigem moduliertem optischen Signal auf mehr als 2 Phasenniveaus moduliert wird.

**7.** Verfahren nach Anspruch 5, **dadurch gekennzeichnet, dass** wenigstens eins unter besagtem ersten gleichphasigem moduliertem optischen Signal und besagtem zweiten gleichphasigem moduliertem optischen Signal nach eine Modulation vom Typ BPSK oder QPSk moduliert wird.

**8.** Vorrichtung zur Polarisationsdemultiplexierung für einen kohärenten optischen Empfänger bestehend aus:

einem adaptativen Filter (24) zur Polarisationsdemultiplexierung , der in der Lage ist, ein erstes gemultiplextes Signal (29) und ein zweites gemultiplextes Signal (30) so zu filtern, dass ein erstes gefiltertes Signal (31) und ein zweites gefiltertes Signal (32) erzeugt werden,
einem iterativen Justiermodul (33, 34), das in der Lage ist , mindestens einen Fehlerparameter entsprechend besagten erstem und zweitem gefilterten Signal zu bestimmen und auf iterative Weise die Koeffizienten des besagten adaptativen Filters (24) nach dem besagten wenigstens einen Fehlerparameter anzupassen,
wobei besagte Koeffizienten mit Proben besagter gefilterter Eingangssignale assoziiert werden, die zu sukzessiven Uhrzeiten genommen werden,
einem Vergleichsmodul (42 und 43), das besagtes erstes und zweites gefiltertes Signal (31, 32) untereinander so vergleichen kann, dass es einen Entartungszustand ausmacht, einem Steuermodul (44), das in der Lage ist, vier zentrale Koeffizienten, die nicht gleich Null sind und die mit einer zentralen Uhrzeit innerhalb der besagten sukzessiven Uhrzeiten verknüpft sind, ausgehend von einem gewählten Wert eines Rotationswinkels $\theta$ und einem ausgewählten Wert einer Elliptizität $\delta$, zu berechnen, wobei die vier zentralen Koeffizienten eine Rotationsmatrix bilden

$$\begin{bmatrix} \cos\theta & e^{-j\delta}\sin\theta \\ -e^{j\delta}\sin\theta & \cos\theta \end{bmatrix}$$

die modifizierten ursprünglichen Filterkoeffizienten dem adaptativen Filter als Reaktion auf eine Ortung des besagten Entartungszustands aufzuerlegen,
sukzessive unterschiedliche Rotationswinkelwerte und Elliptizitätswerte als Reaktion auf sukzessive Ortungen des besagten Entartungszustands zu wählen, um jedes Mal den besagten zentralen Koeffizienten zu berechnen, der nicht gleich Null ist.

**9.** Vorrichtung nach Anspruch 8, die unter anderem eine kohärente Detektionskette enthält, die in der Lage ist, zwei elektrische Komponenten als erstes gemultiplextes optisches Signal und als zweites gemultiplextes optisches Signal ausgehend von einem unter Polarisation gemultiplexten optischen Signal zu erzeugen.

**Claims**

**1.** A method of polarization demultiplexing for a coherent optical receiver, comprising the steps consisting of:

filtering in an adaptive polarization demultiplexing filter a first multiplexed signal and a second multiplexed signal so as to produce a first filtered signal and a second filtered signal, said first multiplexed signal and second multiplexed signal constituting two electrical components obtained by a coherent detection sequence of a polarization-multiplexed optical signal,
iteratively determining at least one error parameter based on said first and second filtered signals, and iteratively adjusting the coefficients of said adaptive filter based on said at least one error parameter,
said coefficients being associated with samples of said filtered input signals taken at successive clock times,
comparing said first and second filtered signals to one another so as to detect a state of degeneration,
calculating four central nonzero coefficients associated with a central clock time within said successive clock times based on a selected value of an angle of rotation $\Theta$ and a selected value of an ellipticity $\delta$, the four central coefficients forming a rotation matrix

$$\begin{bmatrix} \cos\theta & e^{-j\delta}\sin\theta \\ -e^{j\delta}\sin\theta & \cos\theta \end{bmatrix}$$

imposing modified initial filter coefficients on said adaptive filter in response to the detection of said state of degeneration, said modified initial filter coefficients comprising said four central nonzero coefficients
iteratively redetermining said at least one error parameter based on said first and second filtered signals, and readjusting said coefficients of said adaptive filter based on said at least one error parameter,
selecting successively different angle of rotation values and ellipticity values in response to successive detections of said state of degeneration, in order to calculate said central nonzero coefficient each time.

2. A method according to claim 1, **characterized by** the fact that said at least one error parameter comprises a first difference between a modulus of the first filtered signal and a first constant, and a second difference between a modulus of the second filtered signal and a second constant.

3. A method according to claim 1 or 2, **characterized by** the fact that said state of degeneration is detected when a comparison value of said first and second filtered signals crosses a predefined threshold value.

4. A method according to claims 1 to 3, **characterized by** the fact that the successively selected values of the angle of rotation cover an interval of amplitude [0, [pi]/2] and the successively selected values of said ellipticity substantially cover the interval [0, [pi]].

5. A method according to one of the claims 1 to 4, **characterized by** the fact that said first multiplexed signal represents a first phase-modulated optical signal carrying a first binary stream and that said second multiplexed signal represents a second phase-modulated optical signal carrying a second binary stream, said second phase-modulated optical signal having, at the output of a source emitting those two modulated signals, an optical polarization substantially perpendicular to that of said first phase-modulated optical signal.

6. A method according to claim 5, **characterized by** the fact that at least one of said first phase-modulated optical signal and second phase-modulated optical signal is modulated across more than two phase levels.

7. In method according to claim 5, **characterized by** the fact that at least one of said first phase-modulated optical signal and second phase-modulated optical signal is modulated using BPSK or QPSK modulation.

8. A polarization demultiplexing device for a coherent optical receiver, comprising:

an adaptive polarization demultiplexing filter (24) capable of filtering a first multiplexed signal (29) and a second multiplexed signal (30) so as to produce a first filtered signal (31) and a second filtered signal (32),
an iterative fitting module (33, 34) capable of iteratively determining at least one error parameter based on said first and second filtered signals, and iteratively fitting the coefficients of said adaptive filter (24) based on said at least one error parameter,
said coefficients being associated with samples of said filtered input signals taken at successive clock times, further comprising
a comparator module (42 and 43) capable of comparing said first and second filtered signals (31, 32) to one another so as to detect a state of degeneration,
a control module (44) capable of calculating four central nonzero coefficients associated with a central clock time within said successive clock times based on a selected value of an angle of rotation $\Theta$ and a selected value of an ellipticity $\delta$, the four central coefficients forming a rotation matrix

$$\begin{bmatrix} \cos\theta & e^{-j\delta}\sin\theta \\ -e^{j\delta}\sin\theta & \cos\theta \end{bmatrix}$$

imposing modified initial filter coefficients on said adaptive filter in response to the detection of said state of degeneration, said modified initial filter coefficients comprising said four central nonzero coefficients and of selecting successively different angle of rotation values and ellipticity values in response to successive detections of said state of degeneration, in order to calculate said central nonzero coefficient each time.

9. A device according to claim 8, further comprising a coherent detection sequence capable of producing two electrical components as a first multiplexed optical signal and second multiplexed optical signal based on a polarization-multiplexed optical signal.

FIG. 1

FIG. 2

FIG. 3

FIG. 4

FIG 5

FIG 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080152362 A1

**Littérature non-brevet citée dans la description**

- **SEB. J SAVORY.** Digital filters for coherent optical receivers. *Optics Express,* 21 Janvier 2008, vol. 16 (2), 804-417
- **SEB. J SAVARY.** Digital filters for coherent optical receivers. *Constant Modulus Algorithm*
- **G. CHARLET et al.** Efficient Mitigation of Fiber Impairments in an Ultra-Long-Haul Transmission of 40Gbit/s Polarization-Multiplexed Data, by Digital Processing in a Coherent Receiver. *OFC'07*
- **D. N. GODARD.** Self-Recovering equalization and carrier tracking in two-dimensional data communication systems. *IEEE Transactions on communications,* 11 Novembre 1980, vol. COM-28, 1867-1875